# EUROPÄISCHE PATENTANMELDUNG

(11) **EP 4 336 458 A1**
(43) Veröffentlichungstag der Anmeldung: **13.03.2024**
(21) Anmeldenummer: 22194684.1
(22) Anmeldetag: 08.09.2022
(51) Int. Cl.: G06T 19/00, G06F 30/20, A63B 24/00

(54) **VERFAHREN UND SYSTEME ZUM BETREIBEN EINER ANZEIGEEINRICHTUNG EINER SIMULATION**

(71) Anmelder: Viewlicity GmbH, 20357 Hamburg (DE)
(72) Erfinder: Pregizer, Christoph, 20357 Hamburg (DE); Posniak, Lukas, 20257 Hamburg (DE)
(74) Vertreter: Hahner, Ralph

(57) **Zusammenfassung**

Die Erfindung betrifft ein Verfahren zum Betreiben einer Anzeigeeinrichtung, insbesondere eines Head-Mounted-Displays, in einer Augmented-Reality-Anwendung oder einer Virtual-Reality-Anwendung zur Bewegungsanalyse wenigstens eines Balls einer Ballsportart in einer vorgegebenen Umgebung, wobei Kontextinformation in Bezug auf die vorgegebene Umgebung bekannt ist und wobei das Verfahren die folgenden Arbeitsschritte aufweist:
• Einlesen von Daten wenigstens eines 2D-Bilds der vorgegebenen Umgebung;
• Identifizieren von charakteristischen Punkten von Oberflächen in dem 2D-Bild;
• Erzeugen eines 3D-Gitternetzes, welches die Umgebung charakterisiert, auf der Grundlage der charakteristischen Punkte und der Kontextinformationen;
• Berechnen einer, insbesondere idealen, Trajektorie des Balls in Abhängigkeit einer Startposition des Balls, einer Zielposition des Balls und des 3D-Gitternetzes; und
• Wiedergeben der berechneten Trajektorien in der Anzeigeeinrichtung in der Weise, dass die Trajektorie als eine Linie in der Anzeigeeinrichtung in Überlagerung mit mindestens einem, insbesondere realen, sichtbaren Abschnitt der vorgegebenen Umgebung angezeigt wird, insbesondere wenn das Sichtfeld der Anzeigeeinrichtung auf den wenigstens einen real sichtbaren Abschnitt der vorgebebenen Umgebung gerichtet ist.

## Beschreibung

Die Erfindung betrifft Verfahren und Systeme zum Betreiben einer Anzeigeeinrichtung in einer Augmented Reality-Anwendung, einer Mixed Reality-Anwendung oder einer Virtual Reality-Anwendung zur Bewegungsanalyse eines Balls einer Ballsportart in einer vorgegebenen Umgebung.

Zur Berechnung von Trajektorien eines in der Umgebung rollenden Balls werden möglichst detaillierte Daten der topologischen Beschaffenheit des Untergrunds, auf welchem der Ball rollt, benötigt, um die durch Neigungen auf den Ball wirkenden Kräfte bei der Berechnung von dessen Bewegungsbahn berücksichtigen zu können. Mittels des 3D-Gitternetzes können dann Simulationen des rollenden Balls erstellt werden und diese einem Benutzer über eine grafische Benutzerschnittstelle ausgegeben werden.

Das Dokument US 2015/0343292 A1 offenbart ein System, welches ein angereichertes Bild des Golfballs in einem Head-up-Display anzeigen kann, welches am Kopf einer Person getragen wird. Durch die Anzeige eines angereicherten Bilds des Golfballs kann der Benutzer das angereicherte Bild sehen, während er seine Hände frei hat. Das angereicherte Bild kann dabei zumindest einen Teil der Trajektorie des Golfballs enthalten.

Das Dokument WO 2017/103270 A1 offenbart ein Verfahren zur Bewegungsanalyse eines Sportgeräts einer Ballsportart, insbesondere eines Schlägers, vorzugsweise Golfschlägers, oder eines Balls, vorzugsweise eines Golfballs, wobei ein erstes virtuelles Trajektorienmodell in einer Anzeigeeinrichtung in der Weise wiedergegeben wird, dass das erste virtuelle Trajektorienmodell als eine erste Linie in der Anzeigeeinrichtung in Überlagerung in wenigstens einem, insbesondere real sichtbaren Abschnitt der Umgebung angezeigt wird.

Das Dokument EP 3 994 670 A1 offenbart ein Verfahren, umfassend:
Empfangen eines zweidimensionalen Bildes, das ein 2D-Objekt enthält, durch einen oder mehrere Prozessoren,
Identifizieren einer Kontur des 2D-Objekts durch den einen oder die mehreren Prozessoren;
Erzeugen eines dreidimensionalen Netzes durch den einen oder die mehreren Prozessoren auf der Grundlage der Kontur des 2D-Objekts; und
Anwenden einer Textur des 2D-Objekts auf das 3D-Netz durch den einen oder die mehreren Prozessoren, um ein 3D-Objekt auszugeben, das das 2D-Objekt darstellt, wobei die Textur auf der Grundlage eines Kontexts einer Vorrichtung angewendet wird, auf der das 3D-Objekt erzeugt wird.

Es ist eine Aufgabe der Erfindung, verbesserte 3D-Gitternetze der Umgebung zur Berechnung einer Trajektorie eines in der Umgebung rollenden Balls zu erstellen oder bestehende 3D-Gitternetze zu verbessern.

Diese Aufgabe wird durch die unabhängigen Ansprüche gelöst. Vorteilhafte Ausgestaltungen werden in den Unteransprüchen beansprucht.

Ein erster Aspekt der Erfindung betrifft ein Verfahren zum Betreiben einer Anzeigeeinrichtung, insbesondere eines Head-Mounted-Displays, in einer Augmented-Reality-Anwendung oder einer Virtual-Reality-Anwendung zur Bewegungsanalyse wenigstens eines Balls einer Ballsportart in einer vorgegebenen Umgebung, wobei Kontextinformation in Bezug auf die vorgegebene Umgebung bekannt ist und wobei das Verfahren die folgenden Arbeitsschritte aufweist:
- Einlesen von Daten wenigstens eines 2D-Bilds der vorgegebenen Umgebung;
- Identifizieren von charakteristischen Punkten von Oberflächen in dem 2D-Bild;
- Erzeugen eines 3D-Gitternetzes, welches die Umgebung charakterisiert, auf der Grundlage der charakteristischen Punkte und der Kontextinformationen;
- Berechnen einer, insbesondere idealen, Trajektorie des Balls in Abhängigkeit einer Startposition des Balls, einer Zielposition des Balls und des 3D-Gitternetzes; und
- Wiedergeben der berechneten Trajektorie in der Anzeigeeinrichtung in der Weise, dass die Trajektorie als eine Linie in der Anzeigeeinrichtung in Überlagerung mit mindestens einem, insbesondere realen, sichtbaren Abschnitt der vorgegebenen Umgebung angezeigt wird, insbesondere wenn das Sichtfeld der Anzeigeeinrichtung auf den wenigstens einen real sichtbaren Abschnitt der vorgebebenen Umgebung gerichtet ist.

Ein zweiter Aspekt der Erfindung betrifft ein Verfahren zum Betreiben einer Anzeigeeinrichtung, insbesondere eines Head-Mounted-Displays, in einer Augmented-Reality-Anwendung oder einer Virtual-Reality-Anwendung zur Bewegungsanalyse wenigstens eines Balls einer Ballsportart in einer vorgegebenen Umgebung, bei der Kontextinformation in Bezug auf die vorgegebene Umgebung bekannt ist, wobei das Verfahren die folgenden Arbeitsschritte aufweist:
- Einlesen von Daten eines 3D-Gitternetzes der vorgegebenen Umgebung;
- Aktualisieren des 3D-Gitternetzes der vorgegebenen Umgebung auf der Grundlage der Kontextinformationen;
- Berechnen einer, insbesondere idealen, Trajektorie des Balls in Abhängigkeit von einer Startposition des Balls, einer Zielposition des Balls und des 3D-Gitternetzes; und
- Wiedergeben der berechneten Trajektorie in der Anzeigeeinrichtung in der Weise, dass die Trajektorie als eine Linie in der Anzeigeeinrichtung in Überlagerung mit wenigstens einem, insbesondere realen, sichtbaren Abschnitt der vorgegebenen Umgebung angezeigt wird, insbesondere wenn das Sichtfeld der Anzeigeeinrichtung auf den wenigstens einen real sichtbaren Abschnitt der vorgegebenen Umgebung gerichtet ist.

Ein dritter Aspekt der Erfindung betrifft ein System zum Betreiben einer Anzeigeeinrichtung, insbesondere eines Head-Mounted-Displays, in einer Augmented-Reality-Anwendung oder einer Virtual-Reality-Anwendung zur Bewegungsanalyse wenigstens eines Balls einer Ballsportart in einer vorgegebenen Umgebung, wobei Kontextinformation in Bezug auf die vorgegebene Umgebung bekannt ist, aufweisend:
- eine Schnittstelle zum Einlesen von Daten wenigstens eines 2D-Bilds der vorgegebenen Umgebung;
- Mittel zum Identifizieren von charakteristischen Punkten von Oberflächen in dem wenigstens einen 2D-Bild;
- Mittel zum Erzeugen eines 3D-Gitternetzes, welches die Umgebung charakterisiert, auf der Grundlage der charakteristischen Punkte und der Kontextinformation;
- Mittel zum Berechnen einer, insbesondere idealen, Trajektorie des Balls in Abhängigkeit einer Startposition des Balls, einer Zielposition des Balls und des 3D-Gitternetzes; und
- Mittel zum Wiedergeben berechneten Trajektorie in der Anzeigeeinrichtung in der Weise, dass die Trajektorie als eine Linie in der Anzeige eines in Überlagerung mit wenigstens einem, insbesondere real sichtbaren, Abschnitt der vorgegebenen Umgebung angezeigt wird, insbesondere wenn das Sichtfeld der Anzeigeeinrichtung auf dem wenigstens einen real sichtbaren Abschnitt der vorgegebenen Umgebung gerichtet ist.

Ein vierter Aspekt der Erfindung betrifft ein System zum Betreiben einer Anzeigeeinrichtung, insbesondere eines Head-Mounted-Displays, in einer Augmented-Reality-Anwendung oder einer Virtual-Reality-Anwendung zur Bewegungsanalyse wenigstens eines Balls einer Ballsportart in einer vorgegebenen Umgebung, wobei Kontextinformation in Bezug auf die vorgegebene Umgebung bekannt ist, aufweisend:
- eine Schnittstelle zum Einlesen von Daten eines 3D-Gitternetzes der vorgegebenen Umgebung;
- Mittel zum Aktualisieren des 3D-Gitternetzes der vorgegebenen Umgebung auf der Grundlage der Kontextinformationen;
- Mittel zum Berechnen einer, insbesondere idealen, Trajektorie eines Balls, in Abhängigkeit einer Startposition des Balls, einer Zielposition des Balls und des 3D-Gitternetzes; und
- Mittel zum Wiedergeben der berechneten Trajektorie in der Anzeigeeinrichtung in der Weise, dass die Trajektorie als eine Linie in der Anzeigeeinrichtung in Überlagerung mit wenigstens einem, insbesondere realen, sichtbaren Abschnitt der vorgegebenen Umgebung angezeigt wird, insbesondere wenn das Sichtfeld der Anzeigeeinrichtung auf den wenigstens einen real sichtbaren Abschnitt der vorgegebenen Umgebung gerichtet ist.

Ein fünfter Aspekt der Erfindung betrifft eine Anzeigeeinrichtung, insbesondere ein Head-Mounted-Display, mit einem System gemäß dem dritten oder vierten Aspekt der Erfindung.

Kontextinformationen im Sinne der Erfindung sind vorzugsweise Erkenntnisse in Bezug auf die Beschaffenheit der Umgebung, die aus einer Analyse einer Vielzahl an typischen Oberflächen und Topologien von vergleichbaren Umgebungen, auf denen Bälle entsprechend der vorliegenden Erfindung rollen, gewonnen wurden. Vorzugsweise ist die vorgegebene Umgebung ein Putting Green eines Golfplatzes.

Ein charakteristischer Punkt im Sinne der Erfindung ist vorzugsweise ein Bereich einer Oberfläche, welcher aufgrund einer bestimmten Beschaffenheit wiedererkannt werden kann. Eine solche bestimmte Beschaffenheit kann vorzugsweise eine Farbe, eine Textur, eine Rauheit, eine geometrische Form oder jede weitere Art von wiedererkennbarer Beschaffenheit sein.

Ein 3D-Gitternetz im Sinne der Erfindung enthält Daten über einen räumlichen Geländeverlauf zur Verwendung in einer Simulation. Vorzugsweise weist das 3D-Gittnetz ein Netz aus Knoten auf oder auch Höhenlinien. 3D bedeutet hierbei dreidimensional. 2D bedeutet zweidimensional.

Ein Mittel im Sinne der Erfindung kann hardware- und oder softwaretechnisch ausgebildet sein und insbesondere eine, vorzugsweise mit einem Speicher- und/oder Bussystem für Daten bzw. Signale, insbesondere digitale Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, festkörperartige und/oder nichtflüchtige Medien aufweisen. Das Programm kann derart beschaffen sein, dass es die hier beschriebenen Verfahren verkörpert bzw. auszuführen imstande ist, so dass die CPU die Schritte solcher Verfahren ausführen kann.

Die Erfindung beruht auf der Erkenntnis, dass Kontextinformationen in Bezug auf eine vorgegebene Umgebung dazu benutzt werden können, um das Erzeugen von 3D-Gitternetzen von Topologien in einer Umgebung zu verbessern und/oder bestehende 3D-Gitternetze zu verbessern.

Die Erfindung wählt einen anderen Weg, indem nicht nur Information von Sensoren bei dem Erstellen des 3D-Gitternetzes berücksichtigt werden, sondern auch Kontextinformation.

Das 3D-Gitternetz wird vorzugsweise durch einen modifizierten SLAM-Algorithmus und/oder Verfahren der Photogrammetrie erzeugt, welche die Kontextinformation berücksichtigen. Weiter vorzugsweise wird beim Erzeugen und/oder Aktualisieren des 3D-Gitternetzes ein auf einem SLAM-Algorithmus und/oder Verfahren der Photogrammetrie beruhendes 3D-Gitternetz mittels der Kontextinformation verändert und/oder korrigiert.

Bei einem sogenannten SLAM-Algorithmus erstellt ein automatisiertes System, zum Beispiel ein sogenanntes Head-Mounted-Display, ein 3D-Gitternetz oder eine Karte seiner Umgebung. SLAM steht hierbei im Englischen für *"Simultaneous Localization and Mapping".* Hierbei erkundet das System eine unbekannte Umgebung und orientiert sich in dieser. Informationen aus Sensoren, welche die Umgebung wahrnehmen können, insbesondere optische oder Radarsensoren, werden hierbei zu einem 3D-Gitternetz der Umgebung zusammengesetzt.

Durch die Erfindung können Fehler vermieden werden, welche beim Erzeugen eines 3D-Gitternetzes durch fehlende Informationen, insbesondere durch optische Täuschungen oder Überdeckungen, entstehen können. Wird beispielsweise das 3D-Gitternetz eines Putting Green erzeugt, so könnte beispielsweise eine bekannte Kontextinformation sein, dass ein Putting Green in seinem Innenbereich keine Unstetigkeiten aufweist. So können beispielsweise Löcher, welche in aus eingelesenen 2D-Bildern oder in von einem Umgebungssensor erzeugten Daten vorhanden sind, ausgeglichen werden. Auch Personen oder mobile Gegenstände und Objekte, welche sich nur temporär auf diesem Putting Green, d.h. in der Umgebung befinden, können auf diese Weise von einer Bestimmung der Topologie der Umgebung ausgeschlossen werden. Diese werden mithin nicht in die Erstellung des 3D-Gitternetzes mit einbezogen. Daher erhält man ein 3D-Gitternetz von hoher Qualität, welches die Topologie der Umgebung wiedergibt. Dies ist wichtig, da das 3D-Gitternetz zur Berechnung der Trajektorie des Balls herangezogen wird.

Durch die Erfindung kann die Anzeigeeinrichtung und auf jedem Putting Green der Welt eingesetzt werden. Von dem System oder der Anzeigeeinrichtung kann selbsttätig jeweils ein 3D-Gitternetz auf der Grundlage von 2D-Bildern erzeugt werden, welches dann zur Berechnung der idealen Trajektorie zum Einsatz kommt.

In einer vorteilhaften Ausgestaltung weist das Verfahren des Weiteren die Arbeitsschritte auf:
- Einlesen von Daten eines weiteren 3D-Gitternetzes der vorgegebenen Umgebung, weitere 2D Bilder der vorgegebenen Umgebung und/oder von weiteren Kontextinformationen in Bezug auf die vorgegebene Umgebung; und
- Aktualisieren des 3D-Gitternetzes auf der Grundlage der Daten des weiteren 3D-Gitternetzes der vorgebebenen Umgebung, der weiteren 2D Bilder der vorgegebenen Umgebung und/oder der weiteren Kontextinformation in Bezug auf die vorgegebene Umgebung.

Durch das Einlesen von Daten eines weiteren 3D-Gitternetzes können beim Erzeugen des 3D-Gitternetzes bereits bestehende Gitternetze berücksichtigt werden. Hierdurch und durch das Berücksichtigen von weiteren Bildern und weiterer Kontextinformation kann das erzeugte 3D-Gitternetz beständig aktualisiert werden. Dies ermöglicht eine besonders realistische Simulation der Trajektorien des Balls.

In einer weiteren vorteilhaften Ausgestaltung des Verfahrens werden mehrere 2D-Bilder eingelesen und beim Erzeugen des 3D-Gitternetzes werden die identifizierten charakteristischen Punkte über mehrere 2D-Bilder abgeglichen. Durch das Berücksichtigen von mehreren 2D-Bildern und das Abgleichen dieser Bilder können räumliche Informationen über die Oberflächen mit charakteristischen Punkten und andere Bereiche der Umgebung gewonnen werden.

In einer weiteren vorteilhaften Ausgestaltung weist das Verfahren des Weiteren die folgenden Arbeitsschritte auf:
- Aufnehmen, insbesondere Fotografieren oder Filmen, der vorgegebenen Umgebung mittels eines Umgebungssensors eines Head-Mounted-Devices eines Benutzers, wobei das Head-Mounted-Device vorzugsweise die Anzeigeeinrichtung ist; und
- Erzeugen oder Einlesen von Daten wenigstens eines 2D-Bilds auf der Grundlage einer aufgenommenen Umgebung;
wobei beim Erzeugen und/oder Aktualisieren des 3D-Gitternetzes die Daten des wenigstens einen 2D-Bilds eingehen.

Hierdurch kann ein Benutzer, insbesondere ein Spieler, welcher das Head-Mounted-Device trägt, selbstständig Daten erzeugen, welche zum Erzeugen oder Aktualisieren des 3D-Gitternetzes herangezogen werden. Dies erlaubt es, ein noch genaueres 3D-Gitternetz zu erstellen. Vorzugsweise kann die Umgebung mittels Time-of-Flight Sensoren, Distanzsensoren, Lidar-Sensoren, etc. aufgenommen werden.

In einer weiteren vorteilhaften Ausgestaltung des Verfahrens werden beim Erzeugen und/oder Aktualisieren des 3D-Gitternetzes Unstetigkeiten oder fehlende charakteristische Punkte der Oberflächen und/oder Unstetigkeiten oder fehlende Abschnitte des 3D-Gitternetzes auf der Grundlage der Kontextinformationen und/oder des übrigen 3D-Gitternetzes interpoliert, extrapoliert oder ergänzt. Hierdurch wird das 3D-Gitternetz an eine tatsächliche Topologie der Umgebung angepasst, welche von der von Umgebungssensoren erfassten Topologie der Umgebung abweichen kann.

In einer weiteren vorteilhaften Ausgestaltung des Verfahrens liegt eine Unstetigkeit dann vor, wenn eine Erhebung oder Absenkung der Umgebung mit mehr als etwa 40 % Steigung, bevorzugt etwa 20 % Steigung, noch mehr bevorzugt etwa 7% Steigung, oder ein Loch in dem 3D-Gitternetz auftritt. Vergleichsweise hohe Neigungen deuten darauf hin, dass an den betreffenden Stellen des Gitternetzes mobile Objekte vorhanden sind, welche nicht im eigentlichen Sinne zu der Umgebung gehören. Daher ist es vorteilhaft, diese als Unstetigkeiten zu behandeln.

In einer weiteren vorteilhaften Ausgestaltung des Verfahrens wird eine Höhe eines Knotens des 3D-Gitternetzes mit der Höhe von benachbarten Knoten verglichen, wobei die Höhe des Knotens auf eine durchschnittliche Höhe der benachbarten Knoten gesetzt wird, wenn eine Differenz zu wenigstens einem der benachbarten Knoten einen Schwellwert überschreitet. Durch dieses Verfahren können insbesondere Löcher in dem 3D-Gitternetz beseitigt und somit Unstetigkeiten geschlossen werden.

In einer weiteren vorteilhaften Ausgestaltung des Verfahrens wird ein Filter, insbesondere ein Gaußfilter, auf das 3D-Gitternetz angewandt, welcher das 3D-Gitternetz glättet. Hierdurch können insbesondere Schwankungen bzw. Störungen beseitigt werden, welche durch das Interpolieren, Extrapolieren und Ergänzen hervorgerufen werden. Auch hierdurch wird erreicht, dass 3D-Gitternetz sich einem tatsächlichen Verlauf einer Umgebung besser anpasst.

In einer weiteren vorteilhaften Ausgestaltung weist das Verfahren des Weiteren die folgenden Arbeitsschritte auf:
- Identifizieren von mit Unsicherheiten behafteten Bereichen des erzeugten und/oder aktualisierten 3D-Gitternetzes;
- Erzeugen von Anweisungen an einen Benutzer, welche geeignet sind, diesen zu veranlassen, den Umgebungssensor des Head-Mounted-Devices in die mit Unsicherheiten behafteten Bereiche zu richten; und
- Ausgeben der Anweisung über eine grafische Schnittstelle und/oder einer AudioSchnittstelle eines Head-Mounted-Devices.

Mittels dieser vorteilhaften Ausgestaltung kann ein Benutzer gezielt dazu veranlasst werden, Bereiche der Umgebung, welche zum Erstellen eines 3D-Gitternetzes noch nicht ausreichend erfasst sind, zu vervollständigen. Dies ist insbesondere dann von Vorteil, wenn das 3D-Gitternetz zur Berechnung der Trajektorie allein anhand der Aufnahmen eines Umgebungssensors eines Head-Mounted-Displays erzeugt wird.

Vorzugsweise ist die Kontextinformation in Bezug auf die Umgebung wenigstens eine Kontextinformation aus der folgenden Gruppe:
- eine Art der Umgebung, insbesondere ein Putting Green;
- Beschaffenheit der Umgebung, insbesondere aus einem Green Book;
- geografische Merkmale;
- topografische Merkmale; und
- topologische Merkmale, insbesondere typische Neigung und Höhenlinien, die auf Basis einer Analyse von vergleichbar konturierten Flächen gewonnen werden.

Diese Informationen können vorzugsweise über eine Datenschnittstelle zur Verfügung gestellt werden. Vorzugsweise liegen diese Daten in einer Daten-Cloud und das Verfahren kann darauf zugreifen.

In einer weiteren vorteilhaften Ausgestaltung des Verfahrens liegt die Kontextinformation in Form eines Umgebungsmodells vor, welches auf einem künstlichen neuronalen Netz beruht und mittels Daten einer Mehrzahl an Umgebungen der gleichen Art trainiert wurde. Hierdurch können für eine bestimmte Art von Umgebung detaillierte Kontextinformationen bereitgestellt werden, insbesondere auch solche, deren Zusammenhang mit der Umgebung sich für einen Benutzer nicht erschließt.

In einer weiteren vorteilhaften Ausgestaltung des Verfahrens wird das 3D-Gitternetz ausschließlich in einem Bereich der Startposition, in einem Bereich der Zielposition oder in einem Bereich dazwischen erzeugt und/oder aktualisiert. Hierdurch kann das Erzeugen des Gitternetzes auf jenen Bereich begrenzt werden, welcher für das Erzeugen der Trajektorie des Balls von Interesse ist. Dies beschleunigt die Berechnung und/oder schont Ressourcen.

In einer weiteren vorteilhaften Ausgestaltung weist das Verfahren wenigstens einen der folgenden Arbeitsschritte auf:
- Messen einer Position und/oder einer Ausrichtung, insbesondere kontinuierlich, der Anzeigerichtung;
- Berechnen eines Sichtfelds der Anzeigerichtung in dem Bezugssystem auf der Grundlage ihrer gemessenen Position und/oder Ausrichtung;
- Erfassen einer Startposition des Balls, insbesondere einer Abschlagsposition, in dem Bezugssystem;
- Erfassen einer definierten Zielposition für den Ball, insbesondere eines Golflochs, in dem Bezugssystem;
- Erstellen eines ersten virtuellen Trajektorienmodells des Balls für das Sichtfeld der Anzeigeeinrichtung auf der Grundlage der berechneten Trajektorie des Balls, wobei das Wiedergeben der berechneten Trajektorie auf der Grundlage des virtuellen Trajektorienmodells erfolgt.

Weitere vorteilhafte Merkmale ergeben sich aus der nachfolgenden Beschreibung in Zusammenhang mit den Figuren.

Es zeigen wenigstens teilweise schematisch:
- **Figur 1:**: Ein Anwendungsbeispiel einer Anzeigeeinrichtung zur Bewegungsanalyse eines Balls;
- **Figur 2:**: eine weitere Ansicht des Anwendungsbeispiels der Anzeigeeinrichtung zur Bewegungsanalyse eines Balls;
- **Figur 3:**: ein erstes Ausführungsbeispiel eines 3D-Gitternetzes;
- **Figur 4:**: ein zweites Ausführungsbeispiel eines 3D-Gitternetzes;
- **Figur 5:**: ein Flussdiagramm eines ersten Ausführungsbeispiels eines Verfahrens zum Betreiben einer Anzeigeeinrichtung;
- **Figur 6:**: ein Flussdiagramm eines zweiten Ausführungsbeispiels des Verfahrens zum Betreiben einer Anzeigeeinrichtung;
- **Figur 7:**: ein Ausführungsbeispiel einer Anzeigeeinrichtung;
- **Figur 8:**: ein erstes Ausführungsbeispiel eines Systems zum Betreiben einer Anzeigeeinrichtung;
- **Figur 9:**: ein zweites Ausführungsbeispiel des Systems zum Betreiben einer Anzeigeeinrichtung.

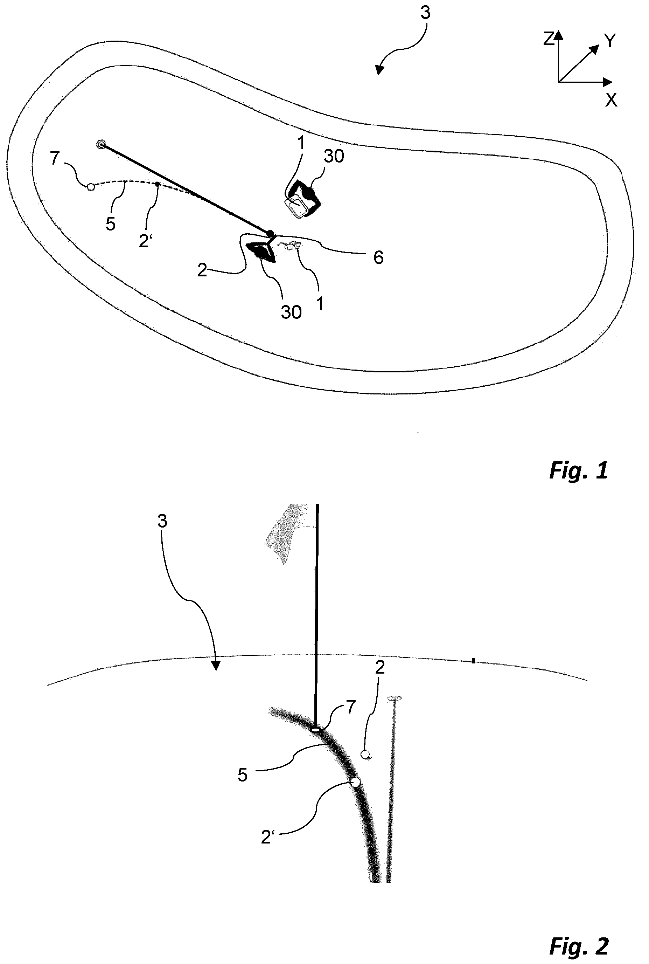

Figur 1 zeigt ein Anwendungsbeispiel einer Anzeigeeinrichtung 1 für eine Augmented Reality-Anwendung. Hierbei lässt sich ein Benutzer 30 eine ideale Trajektorie 5 zwischen einem Abschlagpunkt 6 eines Golfballs 2 und dem Golfloch 7 auf einem Putting Green anzeigen. Die ideale Trajektorie 5 mit der Umgebung 3 überlagert. Auf dieser idealen Trajektorie 5 kann auch die Bewegung eines virtuellen Balls 2' dargestellt werden. Hierdurch kann das Lernen von Bewegungsabläufen zum sogenannten Putten wesentlich verbessert werden. Die Richtungen X, Y und Z stellen ein Bezugssystem dar, in welches sowohl die Umgebung 3 als auch die ideale Trajektorie 5 transformiert wird.

Wie in Figur 1 dargestellt, kann die Anzeigeeinrichtung 1 sowohl ein Computer oder Tablet sein, welches beispielsweise von einem Trainer 30 bedient wird, oder auch ein Head-Mounted-Display, dargestellt durch eine Brille, welche der Spieler selbst trägt.

Figur 2 ist eine weitere Ansicht des Anwendungsbeispiels aus Figur 1, wobei die ideale Trajektorie 5 in Umgebung 3, d.h. auf dem Putting Green, in dem Head-Mounted-Display insbesondere der Brille 1, wiedergegeben wird. Die ideale Trajektorie 5 verläuft hierbei von einem nicht sichtbaren Startpunkt 6 zu dem Loch 7. Der virtuelle Ball 2' ist auf der idealen Trajektorie 5 dargestellt. Der Spieler 30 (nicht dargestellt) hat den Schlag bereits ausgeführt, die reale Stellung des Balls 2 ist ebenfalls sichtbar und weicht von der idealen Trajektorie 5 ab. Dies ermöglicht es einem Spieler 30, seine Schlagtechnik so lange zu verbessern, bis er die ideale Trajektorie 5 trifft.

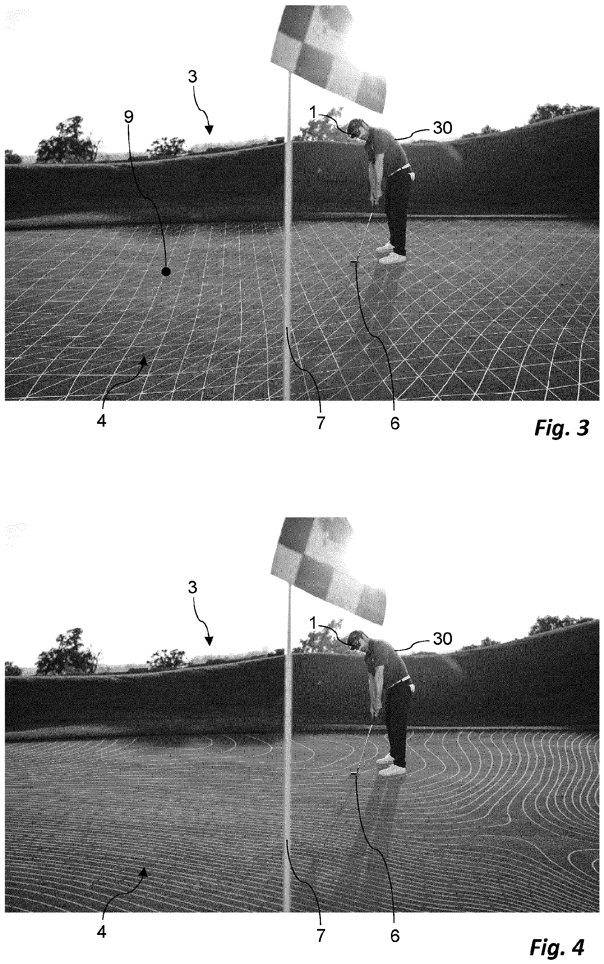

Um eine ideale Trajektorie 5 zu berechnen, sind sowohl die Abschlagsposition 6 als auch die Zielposition 7 des Balls notwendig sowie eine Topologie des Untergrunds. Im Allgemeinen wird eine solche Topologie durch ein 3D-Gitternetz vorgegeben, welches aus Maschen von Höhenlinien besteht, welche Knoten 9 bilden. Die Maschenweite beträgt vorzugsweise weniger als 10 cm, bevorzugt 5 cm. Dies ist in Figur 3 dargestellt. Dort trägt der Golfspieler ein Head-Mounted-Display, beispielsweise eine sogenannte HoloLens^{®}, mit welcher sich dieser eine ideale Trajektorie 5 (nicht dargestellt) von dem Abspielpunkt 6 zu dem durch die Fahnen markierten Golfloch 7 in der Umgebung 3 anzeigen lässt.

Außer der Abschlagsposition 6, der Zielposition 7 und der Topologie des zu bespielenden Untergrunds kommen vorzugsweise noch weitere Parameter zur Berechnung der Trajektorie zum Einsatz, wie beispielsweise eine Grüngeschwindigkeit des Putting Green sowie ein Rollwiderstand des Balls 2 (nicht dargestellt).

Figur 4 zeigt ein weiteres Ausführungsbeispiel eines 3D-Gitternetzes. Das 3D-Gitternetz bildet hierbei Höhenlinien des Putting Green ab. Auch diese Art von 3D-Gitternetz kann zur Berechnung einer idealen Trajektorie 5 (nicht dargestellt) dienen.

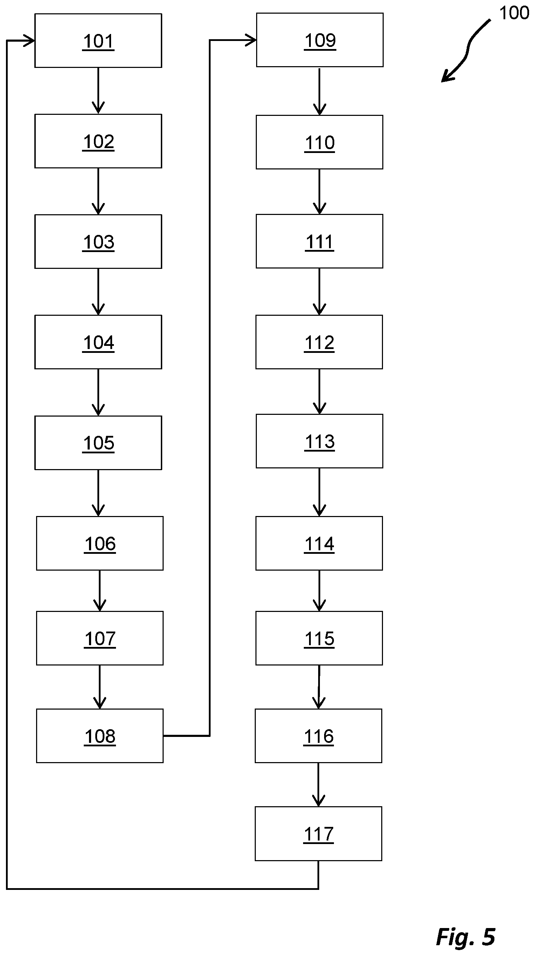

Figur 5 zeigt ein erstes Ausführungsbeispiel eines Verfahrens zum Betreiben einer Anzeigeeinrichtung 1, insbesondere eines Head-Mounted-Devices in einer Augmented-Reality-Anwendung, einer Mixed-Reality-Anwendung oder einer Virtual-Reality-Anwendung zur Bewegungsanalyse des Balls 2 in der vorgegebenen Umgebung 3.

In einem ersten Arbeitsschritt 101 fotografiert oder filmt ein Benutzer das Putting Green 3 mittels einer Kamera 8, welche vorzugsweise an dem Head-Mounted-Display des Benutzers 30 angebracht ist.

In einem zweiten Arbeitsschritt 102 werden Daten wenigstens eines 2D-Bilds auf der Grundlage des aufgenommenen Putting Green 3 erzeugt.

In einem dritten Arbeitsschritt 103 werden die Daten des wenigstens einen 2D-Bilds des Putting Green 3 eingelesen.

In einem vierten Arbeitsschritt 104 werden charakteristische Punkte von Oberflächen in dem 2D-Bild des Putting Green identifiziert. Solche charakteristischen Punkte sollen möglichst eindeutig zu identifizieren sein, so dass diese in verschiedenen 2D-Bildern desselben Putting Green 3 dieselben Punkte wiedererkannt werden können. Ein solches Identifizieren kann beispielsweise über deren Farbe, deren Oberflächenstruktur, Reflektivität etc. geschehen. Anhand dieser charakteristischen Punkte, welche in unterschiedlichen 2D-Bildern identifiziert wurden, kann aus den 2D-Bildern das 3D-Gitternetz erzeugt werden.

In einem fünften Arbeitsschritt 105 wird das 3D-Gitternetz des Putting Green 3 erzeugt. Außer den charakteristischen Punkten werden hierbei auch Kontextinformationen über das Putting Green 3 berücksichtigt. In Bezug auf ein Putting Green 3 ist beispielsweise bekannt, dass dieses nur geringe Gefälle bzw. Steigungen aufweist. Daher können Steigungen, welche einen gewissen Schwellwert überschreiten, auf Objekte zurückgeführt werden, welche sich lediglich auf dem Putting Green 3 befinden. Darüber hinaus ist ein Putting Green auch relativ eben und weist keine Löcher (außer dem Golfloch) auf. Werden entsprechende Artefakte in den 2D-Bildern aufgefunden, so können diese anhand der Kontextinformationen korrigiert werden. Dies trägt zu einer besonders hohen Qualität des 3D-Gitternetzes in Bezug auf das durch dieses repräsentierte Putting Green bei.

In einem sechsten Arbeitsschritt 106 wird eine ideale Trajektorie 5 des Balls 2 auf dem Putting Green 6 zwischen dem Abschlagspunkt 6 und dem Golfloch 7 auf der Grundlage des 3D-Gitternetzes und gegebenenfalls weiterer Informationen wie der Grüngeschwindigkeit und dem Rollwiderstand des Balls 2 berechnet.

Vorzugsweise wird in einem siebten Arbeitsschritt 107 eine Position und/oder eine Ausrichtung der Anzeige des Head-up-Displays 1 gemessen. Vorzugsweise wird dies kontinuierlich durchgeführt.

In einem achten Arbeitsschritt 108 wird vorzugsweise ein Sichtfeld des Head-up-Displays 1 in dem Bezugssystem XYZ auf der Grundlage ihrer Position und/oder ihrer Ausrichtung berechnet.

In einem neunten Arbeitsschritt 109 wird vorzugsweise die Abschlagposition 6 des Balls 2 in dem Bezugssystem XYZ erfasst.

In einem zehnten Arbeitsschritt 110 wird vorzugsweise die Zielposition 7 für den Ball 2 in dem Bezugssystem XYZ erfasst. Vorzugsweise geschieht das Erfassen der Startposition 6 und der Zielposition 7 ebenfalls über Daten, welche aus dem 2D-Bild bzw. dem aus diesem gebildeten 3D-Gitternetz entnommen werden.

In einem elften Arbeitsschritt 111 wird vorzugsweise ein erstes Trajektorienmodell 2 für das Sichtfeld der Anzeigeeinrichtung 1 auf der Grundlage der berechneten Trajektorie 5 des Balls 2 erstellt.

In einem zwölften Arbeitsschritt 112 wird die berechnete Trajektorie 5 des Balls 2 auf der Grundlage des Trajektorienmodells 2 in der Anzeigeeinrichtung 1 wiedergegeben. Hierbei erscheint die Trajektorie 5 vorzugsweise als eine Linie in der Anzeigeeinrichtung 1 in Überlagerung mit einem im Sichtfeld der Anzeigeeinrichtung 1 sichtbaren Abschnitt des Putting Green 3.

Vorzugsweise ist das Putting Green 3 in einer Augmented-Reality-Anwendung real sichtbar. In einer Virtual-Reality-Anwendung wird das Putting Green 3 lediglich als Bild oder als 3D-Rendering in der Anzeigeeinrichtung 1 wiedergegeben.

In einem dreizehnten Arbeitsschritt 113 werden vorzugsweise mit Unsicherheiten behaftete Bereiche jedes erzeugten 3D-Gitternetzes 4 identifiziert. Vorzugsweise wird hierfür ein Algorithmus verwendet, welcher eine Güte der jeweiligen Bereiche berechnet. Diese Güte wird mit einem Schwellwert verglichen.

In einem vierzehnten Arbeitsschritt 114 werden vorzugsweise Anweisungen an den Benutzer 30 erzeugt, welche geeignet sind, diesen zu veranlassen, die Kamera 8 des Head-Mounted-Displays 1 in die mit Unsicherheiten behafteten Bereiche richten.

Diese Anweisungen werden vorzugsweise in einem fünfzehnten Arbeitsschritt 115 über eine grafische Schnittstelle und/oder eine Audioschnittstelle des Head-Mounted-Displays 1 ausgegeben.

Vorzugsweise werden in einem sechszehnten Arbeitsschritt 116 Daten eines weiteren 3D-Gitternetzes des Putting Green 3, weitere 2D-Bilder des Putting Green 3 und/oder weitere Kontextinformationen in Bezug auf das Putting Green 3 eingelesen.

Auf der Grundlage dieser Daten wird das bereits berechnete 3D-Gitternetz 4 vorzugsweise in einem siebzehnten Arbeitsschritt 117 vorzugsweise aktualisiert.

Vorzugsweise wird das im Vorhergehenden beschriebene Verfahren 100 iterativ wiederholt. Je länger der Benutzer 30 mit seinem Head-Mounted-Display 1 bzw. dessen Kamera 8 Daten über das Putting Green 3 sammelt, desto genauer wird das 3D-Gitternetz 4 des Putting Green 3.

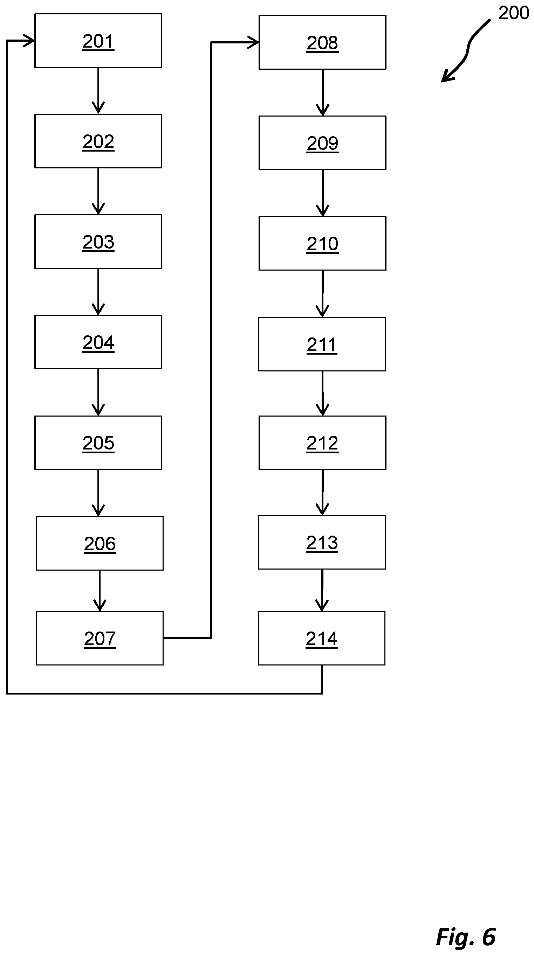

In Bezug auf Figur 6 wird ein zweites Ausführungsbeispiel eines Verfahrens 200 zum Betreiben des Head-Mounted-Displays 1 beschrieben. Dieses Verfahren unterscheidet sich im Wesentlichen dadurch, dass das Verfahren auf einem bereits erzeugten 3D-Gitternetz 4 des Putting Green 3 aufbaut.

Dieses Gitternetz wird in einem dritten Arbeitsschritt 203 eingelesen. In einem vierten Arbeitsschritt 204 wird dieses Gitternetz auf der Grundlage der Kontextinformationen aktualisiert.

Die übrigen Arbeitsschritte entsprechen dem Verfahren 100. Der erste und zweite Arbeitsschritt 201, 202 entsprechen dem ersten und zweiten Arbeitsschritt des Verfahrens 100. Die fünften bis vierzehnten Arbeitsschritte 205 bis 214 entsprechen den Arbeitsschritten 106 bis 115 des Verfahrens 100.

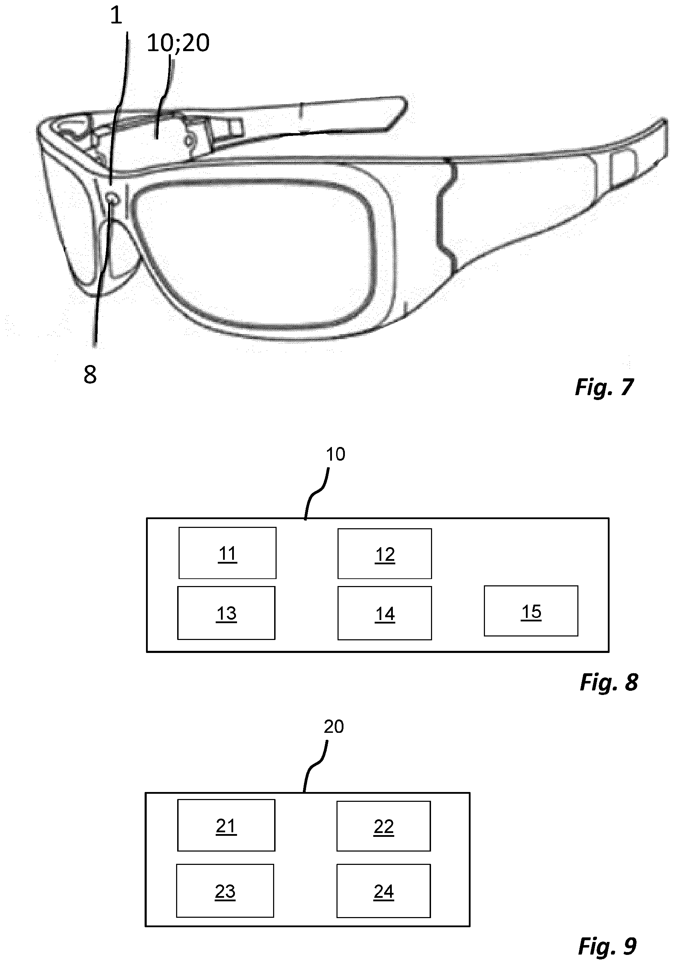

Figur 7 zeigt ein Head-Mounted-Display 1 in Form einer Brille mit einem Umgebungssensor 8, welcher vorzugsweise eine Kamera ist und einem System 10 oder 20 zum Betreiben des Head-Mounted-Displays 1.

In Figur 8 ist ein System 10 zum Ausführen des ersten Ausführungsbeispiels des Verfahrens zum Betreiben des Head-Mounted-Displays 1 gezeigt.

Dieses System 10 weist vorzugsweise eine Schnittstelle 11 zum Einlesen von Daten wenigstens eines 2D-Bilds der vorgegebenen Umgebung 3 auf. Des Weiteren weist das System 10 vorzugsweise Mittel 12 zum Identifizieren von charakteristischen Punkten von Oberflächen in dem wenigstens einen 2D-Bild auf. Weiter vorzugsweise weist das System 10 Mittel 13 zum Erzeugen eines 3D-Gitternetzes 4 auf, welches das Putting Green 3 charakterisiert. Schließlich weist das System 10 vorzugsweise Mittel 14 zum Berechnen der Trajektorie 5 des Balls 2 auf. Schließlich weist das System 10 vorzugsweise Mittel 15 zum Wiedergeben der berechneten Trajektorie 5 in der Anzeigeeinrichtung 1 auf.

Figur 9 zeigt ein entsprechendes System 20 zum Betreiben der Anzeigeeinrichtung 1 mittels des zweiten Ausführungsbeispiels eines entsprechenden Verfahrens 200.

Vorzugsweise weist das System 20 daher eine Schnittstelle 21 zum Einlesen von Daten eines 3D-Gitternetzes 4 des Putting Green 3 auf. Weiter vorzugsweise weist das System 20 Mittel 22 zum Aktualisieren des 3D-Gitternetzes 4 des Putting Green 3 auf. Weiter vorzugsweise weist das System 20 Mittel 23 zum Berechnen einer idealen Trajektorie 5 des Balls 2 und weiter vorzugsweise Mittel 24 zum Wiedergeben der berechneten Trajektorie 5 in der Anzeigeeinrichtung 1 auf.

Es sei darauf hingewiesen, dass es sich bei den Ausführungsbeispielen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung wenigstens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### BEZUGSZEICHENLISTE:

- 1: Anzeigeeinrichtung
- 2: Ball
- 3: Umgebung
- 4: Gitternetz
- 5: Trajektorie
- 6: Startposition
- 7: Zielposition#
- 8: Umgebungssensor
- 9: Knoten
- 10: System
- 11: Schnittstelle
- 12, 13, 14: Mittel
- 20: System
- 21: Schnittstelle
- 22, 23, 24: Mittel
- 30: Benutzer

## Patentansprüche

1. Computer-implementiertes Verfahren (100) zum Betreiben einer Anzeigeeinrichtung (1), insbesondere eines Head-Mounted-Displays, in einer Augmented-Reality-Anwendung, einer Mixed-Reality-Anwendung oder einer Virtual-Reality-Anwendung zur Bewegungsanalyse eines Balls (2) einer Ballsportart in einer vorgegebenen Umgebung (3), wobei Kontextinformation in Bezug auf die vorgegebene Umgebung bekannt ist und wobei das Verfahren (100) die folgenden Arbeitsschritte aufweist:
Einlesen (103) von Daten wenigstens eines 2D-Bilds der vorgegebenen Umgebung (3);
Identifizieren (104) von charakteristischen Punkten von Oberflächen in dem wenigstens einen 2D-Bild;
Erzeugen (105) eines 3D-Gitternetzes (4), welches die Umgebung (3) charakterisiert, auf der Grundlage der charakteristischen Punkte und der Kontextinformation;
Berechnen (106) einer, insbesondere idealen, Trajektorie (5) des Balls (2), in Abhängigkeit einer Startposition (6) des Balls (2), einer Zielposition (7) des Balls (2) und des 3D-Gitternetzes (4); und
Wiedergeben (112) der berechneten Trajektorie (5) in der Anzeigeeinrichtung (1) in der Weise, dass das die Trajektorie (5) als eine Linie in der Anzeigeeinrichtung (1) in Überlagerung mit wenigstens einem, insbesondere real, sichtbaren Abschnitt der vorgegebenen Umgebung (3) angezeigt wird, insbesondere wenn das Sichtfeld der Anzeigeeinrichtung (1) auf den wenigstens einen real sichtbaren Abschnitt der vorgegebenen Umgebung (3) gerichtet ist.

2. Verfahren (100) nach Anspruch 1, des Weiteren die Arbeitsschritte aufweisend:
Einlesen (116) von Daten eines weiteren 3D-Gitternetzes der vorgegebenen Umgebung (3), weitere 2D-Bilder der vorgegebenen Umgebung (3) und/oder von weiterer Kontextinformation in Bezug auf die vorgegebene Umgebung (3); und
Aktualisieren (117) des 3D-Gitternetzes (4) auf der Grundlage der Daten des Weiteren 3D-Gitternetzes der vorgegebenen Umgebung, weiterer 2D-Bilder Gitternetzes der vorgegebenen Umgebung (3) und/oder der weiteren Kontextinformation in Bezug auf die vorgegebene Umgebung (3).

3. Computer-implementiertes Verfahren (200) zum Betreiben einer Anzeigeeinrichtung (1), insbesondere eines Head-Mounted-Displays, in einer Augmented-Reality-Anwendung oder einer Virtual-Reality-Anwendung zur Bewegungsanalyse eines Balls (2) einer Ballsportart in einer vorgegebenen Umgebung, Kontextinformation in Bezug auf die vorgegebene Umgebung bekannt ist und wobei das Verfahren (200) die folgenden Arbeitsschritte aufweist:
Einlesen (203) von Daten eines 3D-Gitternetzes (4) der vorgegebenen Umgebung (3);
Aktualisieren (204) des 3D-Gitternetzes (4) der vorgegebenen Umgebung (3) auf der Grundlage der Kontextinformation;
Berechnen (205) einer, insbesondere idealen, Trajektorie (5) des Balls (2), in Abhängigkeit einer Startposition (6) des Balls (2), einer Zielposition (7) des Balls (2) und des 3D-Gitternetzes (4); und
Wiedergeben (211) der berechneten Trajektorie (5) in der Anzeigeeinrichtung (1) in der Weise, dass die Trajektorie (5) als eine Linie in der Anzeigeeinrichtung (1) in Überlagerung mit wenigstens einem, insbesondere real, sichtbaren Abschnitt der vorgegebenen Umgebung (3) angezeigt wird, insbesondere wenn das Sichtfeld der Anzeigeeinrichtung (1) auf den wenigstens einen real sichtbaren Abschnitt der vorgegebenen Umgebung (3) gerichtet ist.

4. Verfahren (100, 200) nach einem der vorhergehenden Ansprüche, wobei mehrere 2D-Bilder eingelesen werden und beim Erzeugen des 3D-Gitternetzes (4) die identifizierten charakteristischen Punkte zwischen mehreren 2D-Bildern abgeglichen werden.

5. Verfahren (100; 200) nach einem der vorhergehenden Ansprüche, des Weiteren die folgenden Arbeitsschritte aufweisend:
Aufnehmen (101; 201), insbesondere fotografieren oder filmen, der vorgegebenen Umgebung (3) mittels eines Umgebungssensors (8) eines Head-Mounted-Devices eines Benutzers (30), wobei das Head-Mounted-Device vorzugsweise die Anzeigeeinrichtung (1) ist; und
Erzeugen oder Einlesen (102; 202) von Daten wenigstens eines 2D-Bilds auf der Grundlage einer aufgenommenen Umgebung (3);
wobei beim Erzeugen und/oder Aktualisieren des 3D-Gitternetzes (4) die Daten des wenigstens einen 2D-Bilds eingehen.

6. Verfahren (100; 200) nach einem der vorhergehenden Ansprüche, wobei beim Erzeugen und/oder Aktualisieren des 3D-Gitternetzes (4) Unstetigkeiten oder fehlende charakteristische Punkte der Oberflächen und/oder Unstetigkeiten oder fehlende Abschnitte des 3D-Gitternetzes (4) auf der Grundlage der Kontextinformation und/oder des übrigen 3D-Gitternetzes (4) interpoliert, extrapoliert und/oder ergänzt werden.

7. Verfahren (100; 200) nach Anspruch 6, wobei eine Unstetigkeit dann vorliegt, wenn eine Erhebung oder Absenkung der Umgebung (3) mit mehr als etwa 40% Steigung, bevorzugt etwa 20% Steigung, noch bevorzugter etwa 7% Steigung, oder ein Loch in dem 3D-Gitternetz (4) auftritt.

8. Verfahren (100; 200) nach einem der vorhergehenden Ansprüche, wobei beim Erzeugen und/oder Aktualisieren des 3D-Gitternetzes (4) eine Höhe eines Knotens (9) des 3D-Gitternetzes (4) mit der Höhe von benachbarten Knoten verglichen wird, wobei die Höhe des Knotens (9) auf eine durchschnittliche Höhe der benachbarten Knoten gesetzt wird, wenn eine Differenz zu wenigstens einem der benachbarten Knoten einen Schwellwert überschreitet.

9. Verfahren (100; 200) nach einem der vorhergehenden Ansprüche, des Weiteren die Arbeitsschritte aufweisend:
Identifizieren (113; 212) von mit Unsicherheiten behafteten Bereichen des erzeugten und/oder aktualisierten 3D-Gitternetzes (4);
Erzeugen (114; 213) von Anweisungen an den Benutzer (30), welche geeignet sind, diesen zu veranlassen, den Umgebungssensor (8) des Head-Mounted-Devices (1) in die mit Unsicherheiten behafteten Bereiche zu richten; und
Ausgeben (115; 214) der Anweisungen über eine graphische Schnittstelle und/oder eine Audioschnittstelle eines Head-Mounted-Devices (1).

10. Verfahren (100; 200) nach einem der vorhergehenden Ansprüche, wobei die Kontextinformation in Bezug auf die Umgebung (3) wenigstens eine Kontextinformation aus der folgenden Gruppe ist:
Art der Umgebung, insbesondere ein Putting-Green;
Beschaffenheit der Umgebung, insbesondere aus einem Greenbook;
geographische Merkmale;
topographische Merkmale;
topologische Merkmale, insbesondere typische Neigungen oder Höhenlinien, die auf Basis einer Analyse von vergleichbaren konturierten oder geneigten Oberflächen gewonnen wurden.

11. Verfahren (100; 200) nach einem der vorhergehenden Ansprüche, wobei die Kontextinformation in Form eines Umgebungsmodells vorliegen, welches auf einem künstlichen neuronalen Netz beruht und mittels Daten einer Mehrzahl an Umgebungen der gleichen Art trainiert wurde.

12. Verfahren (100; 200) nach einem der vorhergehenden Ansprüche, wobei das 3D-Gitternetz ausschließlich in einem Bereich der Startposition, einem Bereich der Zielposition und in einem Bereich dazwischen erzeugt und/oder aktualisiert wird.

13. Verfahren (100; 200) nach einem der vorhergehenden Ansprüche, des Weiteren wenigstens einen der folgenden Arbeitsschritte aufweisend:
Messen (107; 206) einer Position und/oder einer Ausrichtung, insbesondere kontinuierlich, der Anzeigeeinrichtung (1);
Berechnen (108; 207) eines Sichtfelds der Anzeigeeinrichtung (1) in dem Bezugssystem auf der Grundlage ihrer gemessenen Position und/oder Ausrichtung;
Erfassen (109; 208) einer Startposition (6) des Balls (2), insbesondere einer Abschlagsposition, in dem Bezugssystem;
Erfassen (110; 209) einer definierten Zielposition (7) für den Ball (2), insbesondere eines Golflochs, in dem Bezugssystem;
Erstellen (111: 210) eines ersten virtuellen Trajektorienmodells des Balls (2) für das Sichtfeld der Anzeigeeinrichtung (1) auf der Grundlage der berechneten Trajektorie (5) des Balls (2), wobei das Wiedergeben der berechneten Trajektorie (5) auf der Grundlage des virtuellen Trajektorienmodells erfolgt.

14. System (10) zum Betreiben einer Anzeigeeinrichtung (1), insbesondere eines Head-Mounted-Displays, in einer Augmented-Reality-Anwendung oder einer Virtual-Reality-Anwendung zur Bewegungsanalyse eines Balls (2) einer Ballsportart in einer vorgegebenen Umgebung (3), wobei Kontextinformation in Bezug auf die vorgegebene Umgebung (3) bekannt ist, eingerichtet zum Ausführen eines Verfahrens (100) nach Anspruch 1 oder 2, vorzugsweise in Verbindung mit einem der Ansprüche 4 bis 13, und/oder aufweisend:
eine Schnittstelle (11) zum Einlesen von Daten wenigstens eines 2D-Bilds der vorgegebenen Umgebung (3);
Mittel (12) zum Identifizieren von charakteristischen Punkten von Oberflächen in dem wenigstens einen 2D-Bild;
Mittel (13) zum Erzeugen eines 3D-Gitternetzes (4), welches die Umgebung (3) charakterisiert, auf der Grundlage der charakteristischen Punkte und der Kontextinformation;
Mittel (13) zum Berechnen der, insbesondere idealen, Trajektorie (5) des Balls (2), in Abhängigkeit einer Startposition des Balls (2), einer Zielposition des Balls (2) und des 3D-Gitternetzes (4); und
Mittel (14) zum Wiedergeben der berechneten Trajektorie (5) in der Anzeigeeinrichtung (1) in der Weise, dass die Trajektorie (5) als eine Linie in der Anzeigeeinrichtung in Überlagerung mit wenigstens einem, insbesondere real, sichtbaren Abschnitt der vorgegebenen Umgebung angezeigt wird, insbesondere wenn das Sichtfeld der Anzeigeeinrichtung auf den wenigstens einen real sichtbaren Abschnitt der vorgegebenen Umgebung (3) gerichtet ist.

15. System (20) zum Betreiben einer Anzeigeeinrichtung (1), insbesondere eines Head-Mounted-Displays, in einer Augmented-Reality-Anwendung oder einer Virtual-Reality-Anwendung zur Bewegungsanalyse eines Balls (2) einer Ballsportart in einer vorgegebenen Umgebung (3), wobei Kontextinformation in Bezug auf die vorgegebene Umgebung (3) bekannt ist, eingerichtet zum Ausführen eines Verfahrens (200) nach Anspruch 3, vorzugsweise in Verbindung mit einem der Ansprüche 4 bis 13, aufweisend:
eine Schnittstelle (21) zum Einlesen von Daten eines 3D-Gitternetzes (4) der vorgegebenen Umgebung (3);
Mittel (22) zum Aktualisieren des 3D-Gitternetzes (4) der vorgegebenen Umgebung (3) auf der Grundlage der Kontextinformation;
Mittel (23) zum Berechnen einer, insbesondere idealen, Trajektorie (5) des Balls (2), in Abhängigkeit einer Startposition (6) des Balls (2), einer Zielposition (2) des Balls (2) und des 3D-Gitternetzes (4); und
Mittel (24) zum Wiedergeben der berechneten Trajektorie (5) in der Anzeigeeinrichtung (1) in der Weise, dass die Trajektorie (5) als eine Linie in der Anzeigeeinrichtung (1) in Überlagerung mit wenigstens einem, insbesondere real, sichtbaren Abschnitt der vorgegebenen Umgebung (3) angezeigt wird, insbesondere wenn das Sichtfeld der Anzeigeeinrichtung (1) auf den wenigstens einen real sichtbaren Abschnitt der vorgegebenen Umgebung (3) gerichtet ist.
